# EUROPÄISCHE PATENTSCHRIFT

(11) **EP 2 238 822 B1**
(45) Veröffentlichungstag und Bekanntmachung des Hinweises auf die Patenterteilung: **15.02.2012**
(21) Anmeldenummer: 09005046.9
(22) Anmeldetag: 06.04.2009
(51) Int. Cl.: A01D 34/18

(54) **Mähfingeranordnung**
Mowing finger assembly
Agencement de doigts de coupe

(43) Veröffentlichungstag der Anmeldung: 13.10.2010
(73) Patentinhaber: Erfindergemeinschaft Gustav und Fred Schumacher GbR, 57612 Eichelhardt (DE)
(72) Erfinder: Schumacher, Gustav, 57612 Eichelhardt (DE); Schumacher, Fred, 57612 Eichelhardt (DE)
(74) Vertreter: Müller, Thomas Michael

(56) Entgegenhaltungen:
- DE-A1- 2 855 234
- DE-A1- 2 945 960
- DE-A1- 19 734 337
- US-A- 4 750 321
- US-A1- 2002 005 035

## Beschreibung

Die Erfindung betrifft eine Mähfingeranordnung für Fingerbalkenmähwerke von Erntemaschinen gemäß dem Oberbegriff des Anspruchs 1. Die Mähfingeranordnung dient zum Führen eines Mähmessers und bildet Gegenschneiden für die an dem Mähmesser angeordneten Messerklingen.

Eine solche Mähfingeranordnung ist aus der US 2002/0005035 A1 bekannt.

DE 28 55 234 C2 zeigt einen Doppelmähfinger, der an einem Fingerbalken befestigt werden kann. Der Doppelfinger umfasst ein Oberteil und ein Unterteil, zwischen denen ein Klingenspalt zur Aufnahme des Mähmessers gebildet ist. Das Unterteil umfasst eine Auflageplatte und einen Träger, wobei die Auflageplatte je Mähfinger eine Messerauflage bildet, die an einem hinteren Ende über einen Verbindungssteg miteinander verbunden sind. Der Träger weist je Mähfinger einen Tragarm auf, die über einen weiteren Verbindungssteg miteinander verbunden sind. Das Oberteil ist in Form von zwei separaten Fingern zweiteilig ausgebildet, wobei die beiden Finger an einem freien Ende mit den die Messerauflage bildenden Fingern der Unterteile verbunden sind und jeweils an einem nach hinten weisenden Ende an dem Fingerbalken befestigt werden können. Nachteil hierbei ist jedoch, dass insbesondere die beiden separaten Finger des Oberteils erst durch die Montage am Fingerbalken stabilisiert werden. Insbesondere bei Querkräften, wie sie z.B. auftreten können, wenn ein Stein zwischen eine Messerklinge und eine Gegenschneide gerät, kann der Doppelfinger leicht verbogen werden.

DE 197 34 337 A1 zeigt einen ähnlichen Doppelfinger, wobei die Finger des Oberteils an ihren hinteren Enden über einen Verbindungssteg miteinander verbunden sind. Jedoch besteht hier immer noch die Gefahr, dass bei Querkräften die Finger des Oberteils, insbesondere im Bereich des Klingenspalts, leicht verbogen werden.

Ferner ist auch in der DE 29 45 960 A1 ein ähnlicher Doppelfinger offenbart, wobei in einer Ausführungsform der Verbindungssteg zwischen den Fingern des Oberteils nicht am hinteren Ende der Finger sondern etwas weiter vorgelagert angeordnet ist. Hierdurch kann jedoch bei auftretenden Querkräften ein Verbiegen der hinteren Enden der Finger des Oberteils auftreten. Darüber hinaus ist der gesamte Verbindungssteg gewölbt ausgeführt, um zu ermöglichen, dass Befestigungsschrauben, mit denen die Messerklingen an einer Messerschiene befestigt sind, zwischen dem Oberteil und dem Unterteil des Doppelfingers hindurchgeführt werden können. Dabei kann die Wölbung nicht hoch genug gefertigt werden, um das Mähmesser in zwei verschiedenen Montagestellungen zu montieren. Das Mähmesser kann nur so eingesetzt werden, dass Schraubenköpfe von Befestigungsschrauben der Messerklingen nach oben überstehen. In einer umgedrehten Montagestellung, in der die Schraubenmuttern nach oben überstehen, kann das Mähmesser nicht montiert werden, da die Schraubenschäfte durch die Schraubenmuttern hindurchgeführt sind und weiter von der Messerschiene vorstehen, als die Schraubenköpfe. Die Höhe der Wölbung ist nämlich dadurch eingeschränkt, dass im Übergang vom Verbindungssteg zu den Befestigungsenden der Finger des Oberteils bei zu großen Umformgraden Verwerfungen auftreten. Daher ist die maximale Höhe der Wölbung stark eingeschränkt.

Aufgabe der vorliegenden Erfindung ist es, eine Mähfingeranordnung bereitzustellen, die eine hohe Stabilität gegen auftretende Querkräfte aufweist.

Die Aufgabe wird erfindungsgemäß durch eine Mähfingeranordnung gemäß Anspruch 1 gelöst. Bevorzugte Ausführungen ergeben sich aus den Unteransprüchen.

Durch zwei Verbindungsstege am Oberteil ist eine größere Stabilität des Oberteils und damit der gesamten Mähfingeranordnung gegeben. Zudem können selbst bei höherer Stabilität die Verbindungsstege dünner ausgestaltet werden, als dies bei nur einem Verbindungssteg möglich wäre. Hierdurch ist es möglich, dass zwischen den beiden Verbindungsstegen am Oberteil die Mähfinger eine Wölbung aufweisen, die einen höheren Umformgrad als im Stand der Technik aufweist, so dass die Wölbung höher ausgebildet werden kann, um ein Mähmesser auch mit Schraubenmuttern nach oben weisend montieren zu können.

Vorzugsweise ist der hintere Verbindungssteg des Oberteils an einem in Arbeitsrichtung betrachtet hinteren Ende der Mähfinger angeordnet. Hierbei kann der hintere Verbindungssteg des Oberteils zur Befestigung der Mähfingeranordnung an einem Fingerbalken dienen. Der hintere Verbindungssteg des Unterteils kann in Arbeitsrichtung betrachtet ebenfalls am hinteren Ende der Mähfinger angeordnet sein und vorzugsweise zur Befestigung der Mähfingeranordnung an den Fingerbalken dienen. Bei der Montage der Mähfingeranordnung ist der Fingerbalken somit zwischen dem hinteren Verbindungssteg des Oberteils und dem hinteren Verbindungssteg des Unterteils angeordnet.

Zwischen den beiden vorderen Verbindungsstegen des Unterteils und des Oberteils ist zumindest ein Teil des Klingenspalts gebildet.

In einer bevorzugten Ausführungsform ist vorgesehen, dass das Unterteil eine erste Messerauflage an einem ersten der beiden Mähfinger und eine zweite Messerauflage an einem zweiten der beiden Mähfinger aufweist, wobei die beiden Messerauflagen über den vorderen Verbindungssteg des Unterteils miteinander verbunden sind und wobei der vordere Verbindungssteg des Unterteils eine dritte Messerauflage bildet.

Ferner kann vorgesehen sein, dass das Oberteil eine erste Messeranlage an einem ersten der beiden Mähfinger und eine zweite Messeranlage an einem zweiten der beiden Mähfinger aufweist, wobei die beiden Messeranlagen über den vorderen Verbindungssteg des Oberteils miteinander verbunden sind und wobei der vordere Verbindungssteg des Oberteils eine dritte Messeranlage bildet.

Somit dient der vordere Verbindungssteg des Oberteils auch zur Führung des Mähmessers bzw. der Messerklingen. Der vordere Verbindungssteg des Oberteils ist somit annähernd eben und parallel zu den Messerauflagen des Unterteils angeordnet.

Die Messerauflagen des Unterteils und die Messerauflagen des Oberteils bilden hierbei den Klingenspalt.

Die erste und die zweite Messerauflage bilden jeweils zwei untere Gegenschneiden und die ersten und zweiten Messeranlagen jeweils zwei obere Gegenschneiden für die Messerklingen des Mähmessers.

Das Oberteil weist zwischen dem vorderen und dem hinteren Verbindungssteg je Mähfinger eine Wölbung auf.

Vorzugsweise ist das Oberteil im Bereich der ersten und der zweiten Messeranlagen eben ausgebildet, wobei die Wölbung in Arbeitsrichtung betrachtet vor einer hinteren Kante des vorderen Verbindungsstegs des Oberteils beginnt. Somit kann die Wölbung in Arbeitsrichtung betrachtet sehr früh beginnen und möglichst weit vom Unterteil wegführen, um möglichst viel Raum für das Mähmesser und die Befestigungsschrauben der Messerklingen zu bilden. Da der vordere Verbindungssteg des Oberteils hierbei nicht gewölbt ist, treten keine Verwerfungen auf, so dass die Wölbung höher ausgeführt werden kann als im Stand der Technik üblich.

Bei einer bevorzugten Ausführung weist das Unterteil eine Auflageplatte auf, die die Messerauflagen bildet, wobei das Unterteil ferner einen Träger aufweist, der mit der Auflageplatte verbunden ist und den hinteren Verbindungssteg des Unterteils umfasst.

Um eine erhöhte Stabilität gegen Verbiegen in Querrichtung zu gewährleisten, kann vorgesehen sein, dass in dem hinteren Verbindungssteg des Unterteils Befestigungsdurchbrüche zum Befestigen der Mähfingeranordnung an einen Messerbalken vorgesehen sind, die einen von einem Kreis abweichenden Querschnitt aufweisen.

Ein bevorzugtes Ausführungsbeispiel wird im folgenden anhand der Figuren näher erläutert. Hierin zeigt
- Figur 1: eine perspektivische Ansicht einer erfindungsgemäßen Mähfingeranord- nung;
- Figur 2: eine Draufsicht der Mähfingeranordnung gemäß Figur 1 und
- Figur 3: einen Längsschnitt der Mähfingeranordnung gemäß Figur 2 entlang der Schnittlinie III-III.

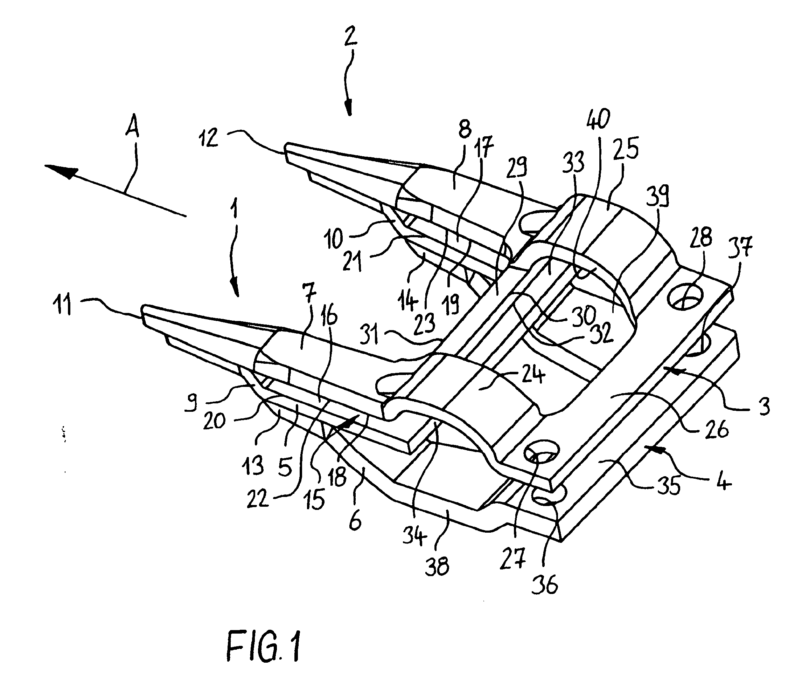

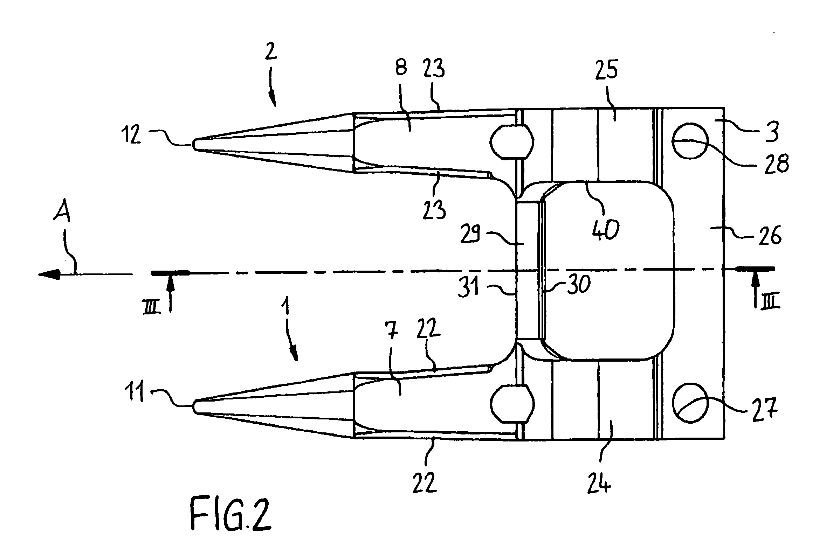

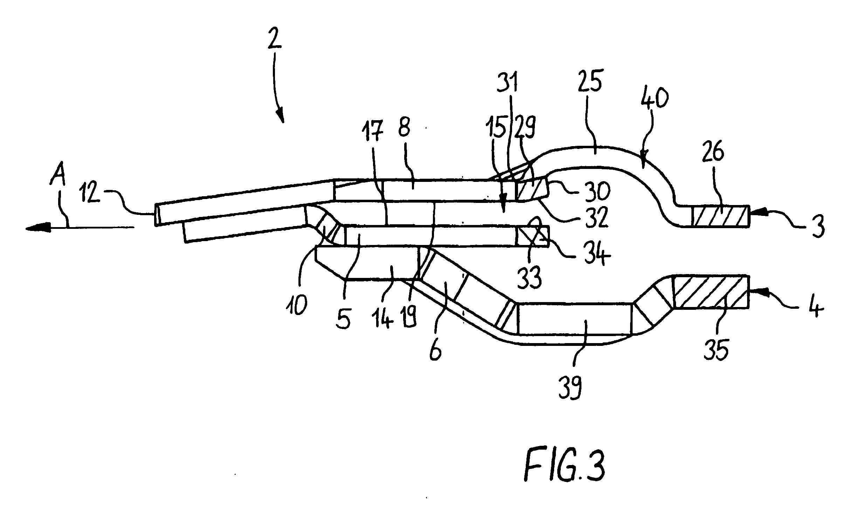

Die Figuren 1 bis 3 zeigen die erfindungsgemäße Mähfingeranordnung in unterschiedlichen Ansichten und werden im folgenden zusammen beschrieben. Die Mähfingeranordnung weist einen ersten Mähfinger 1 und einen zweiten Mähfinger 2 auf, die in einer Arbeitsrichtung A nach vorne ausgerichtet sind. Mit Arbeitsrichtung A ist die Bewegungsrichtung gesamte Mähwerk beim Mähvorgang gemeint. Die Mähfingeranordnung umfasst ein Oberteil 3 und ein Unterteil 4. Hierbei ist das Unterteil 4 durch eine Auflageplatte 5 und einen Träger 6 gebildet, die fest miteinander verbunden sind. Vorzugsweise sind die Auflageplatte 5 und die Träger 6 miteinander verschweißt.

Das Oberteil 3 ist als Blechumformteil gebildet und weist einen ersten oberen Fingerabschnitt 7 und einen zweiten oberen Fingerabschnitt 8 auf. Die Auflageplatte 5 ist ein Stanzteil, das aus Blech gefertigt ist und weist einen ersten unteren Fingerabschnitt 9 und einen zweiten unteren Fingerabschnitt 10 auf. Der erste obere Fingerabschnitt 7 und der erste untere Fingerabschnitt 9 sind an einem freien Ende 11 des ersten Mähfingers 1 miteinander verschweißt. Ebenso sind der zweite obere Fingerabschnitt 8 und der zweite untere Fingerabschnitt 10 an einem freien Ende 12 des zweiten Mähfingers 2 miteinander verschweißt. Der Träger 6 weist einen ersten Tragarm 13 auf, der fest mit dem ersten unteren Fingerabschnitt 9 durch Verschweißen verbunden ist. Ferner weist der Träger 6 einen zweiten Trägerarm 14 auf, der mit dem zweiten unteren Fingerabschnitt 10 verschweißt ist. Der Träger 6 ist hierbei ebenfalls wie das Oberteil 3 aus einem Blechumformteil gefertigt.

In einer Seitenansicht quer zur Arbeitsrichtung A betrachtet ist zwischen dem Oberteil 3 und der Auflageplatte 5 ein Klingenspalt 15 gebildet, in den Messerklingen eines Mähmessers quer zur Arbeitsrichtung A oszillierend bewegbar geführt sind. Hierbei sind die Messerklingen in Draufsicht dreieckförmig gestaltet, wobei eine Spitze des Dreiecks nach vorne in Arbeitsrichtung A weist, wie dies aus dem Stand der Technik allgemein bekannt ist.

Die Auflageplatte 5 weist am ersten Mähfinger 1 eine erste Messerauflage 14 auf, die als ebene Fläche ausgebildet ist, und gegen die die Messerklingen in Anlage kommen. Die erste Messerauflage 16 weist nach oben, wobei gegenüberliegend zur ersten Messerauflage 16 eine erste Messeranlage 18 am ersten oberen Fingerabschnitt 7 des Oberteils 3 gebildet ist. Somit können sich die Messerklingen sowohl nach unten gegen die erste Messerauflage 16 als auch nach oben gegen die erste Messeranlage 18 abstützen. Die erste Messerauflage 16 bildet zudem erste untere Gegenschneiden 20. Die erste Messeranlage 18 bildet erste obere Gegenschneiden 22. Die Gegenschneiden 20, 22 arbeiten mit den Schneiden der Messerklingen zusammen, um das Erntegut zu schneiden.

Analog zum ersten Mähfinger 1 ist der zweite Mähfinger 2 aufgebaut, wobei an dem zweiten unteren Fingerabschnitt 10 eine zweite Messerauflage 17 gebildet ist, die einer zweiten Messeranlage 19 des zweiten oberen Fingerabschnitts 8 gegenüberliegend angeordnet ist. Hierbei bildet die zweite Messerauflage 17 zweite untere Gegenschneiden 21 und die zweite Messeranlage 19 zweite obere Gegenschneiden 23.

Alle Messerauflagen 16, 17 und Messeranlagen 18, 19 sind eben und zumindest annähernd parallel zueinander angeordnet. Zwischen der ersten Messerauflage 16 und der ersten Messeranlage 18 ist ein Spalt gebildet, genauso wie zwischen der zweiten Messerauflage 17 und der zweiten Messeranlage 19. Die beiden Spalte sind Teil des Klingenspalts 15.

Der erste obere Fingerabschnitt 7 weist nach hinten gerichtet eine erste obere Wölbung 24 auf. Der zweite obere Fingerabschnitt 8 weist entsprechend eine zweite obere Wölbung 25 auf. Die beiden oberen Wölbungen 24, 25 wölben sich hierbei nach oben. Nach hinten von den freien Enden 11, 12 abgewandt ist ein hinterer Verbindungssteg 26 des Oberteils 3 vorgesehen, der den ersten oberen Fingerabschnitt 7 mit dem zweiten oberen Fingerabschnitt 8 verbindet. In dem hinteren Verbindungsteil 26 des Oberteils 3 sind Befestigungsbohrungen 27, 28 vorgesehen, mittels derer die Mähfingeranordnung an einem Fingerbalken eines Mähwerks befestigt werden kann.

Zwischen den beiden oberen Fingerabschnitten 7, 8 ist darüber hinaus ein vorderer Verbindungssteg 29 des Oberteils 3 vorgesehen. Der vordere Verbindungssteg 29 des Oberteils 3 weist eine hintere Kante 30 auf, die dem hinteren Verbindungssteg 26 des Oberteils 3 zugewandt ist. Die oberen Wölbungen 24, 25 beginnen in Arbeitsrichtung A betrachtet vor der hinteren Kante 30, im vorliegenden Fall gehen sie von einer vorderen Kante 31 des vorderen Verbindungsstegs 29 des Oberteils 3 aus.

Zwischen den Verbindungsstegen 26, 29 des Oberteils 3 und den oberen Wölbungen 24, 25 ist eine Öffnung 40 gebildet, die sich bis in den hinteren Verbindungssteg 26 des Oberteils 3 erstreckt. Somit ist sicher gestellt, dass der hintere Verbindungssteg 26 des Oberteils 3 nicht gewölbt ist, was zu Verwerfungen bei der Umformung führen könnte.

Der vordere Verbindungssteg 29 des Oberteils 3 ist annähernd parallel zu einem vorderen Verbindungssteg 34 des Unterteils 4 angeordnet. Der vordere Verbindungssteg 29 des Oberteils 3 ist somit nicht gewölbt. Der vordere Verbindungssteg 29 des Oberteils 3 bildet eine dritte Messeranlage 32, die nach unten weist und annähernd parallel zu einer dritten Messerauflage 33 angeordnet ist, die von dem vorderen Verbindungssteg 34 des Unterteils 4 gebildet ist. Somit ist zwischen der dritten Messeranlage 32 und der dritten Messerauflage 33 ein weiterer Spalt gebildet, der ebenfalls Teil des Klingenspalts 15 ist.

Der Träger 6 weist jeweils von der ersten und der zweiten Messerauflage 16, 17 nach hinten gerichtet eine erste und eine zweite untere Wölbung 38, 39 auf, die nach unten gewölbt sind. Die oberen Wölbungen 24, 25 sind jeweils über einer der unteren Wölbungen 38, 39 angeordnet und dienen dazu, das Mähmesser mit den Befestigungsschrauben der Messerklingen aufzunehmen.

Der Träger 6 weist an dem von den freien Enden 11, 12 der Mähfinger 1, 2 abgewandten hinteren Ende einen hinteren Verbindungssteg 35 des Unterteils 4 auf, in dem Befestigungsbohrungen 36, 37 vorgesehen sind, die mit den Befestigungsbohrungen 27, 28 des Oberteils 3 fluchten, so dass mittels sämtlicher Befestigungsbohrungen 27, 28, 36, 37 die Mähfingeranordnung an einem Fingerbalken mittels Befestigungsschrauben montiert werden kann. Vorzugsweise sind die Befestigungsbohrungen 36, 37 des Unterteils 4 im Querschnitt derart ausgebildet, dass sie von einem Kreis abweichen, so dass über entsprechend geformte Befestigungsmittel an dem Mähfingerbalken der Träger 6 gegen Verdrehung gesichert ist.

### Bezugszeichenliste

- 1: erster Mähfinger
- 2: zweiter Mähfinger
- 3: Oberteil
- 4: Unterteil
- 5: Auflageplatte
- 6: Träger
- 7: erster oberer Fingerabschnitt
- 8: zweiter oberer Fingerabschnitt
- 9: erster unterer Fingerabschnitt
- 10: zweiter unterer Fingerabschnitt
- 11: freies Ende des ersten Mähfingers
- 12: freies Ende des zweiten Mähfingers
- 13: erster Trägerarm
- 14: zweiter Trägerarm
- 15: Klingenspalt
- 16: erste Messerauflage
- 17: zweite Messerauflage
- 18: erste Messeranlage
- 19: zweite Messeranlage
- 20: erste untere Gegenschneide
- 21: zweite untere Gegenschneide
- 22: erste obere Gegenschneide
- 23: zweite obere Gegenschneide
- 24: erste obere Wölbung
- 25: zweite obere Wölbung
- 26: hinterer Verbindungssteg des Oberteils
- 27: Befestigungsbohrung
- 28: Befestigungsbohrung
- 29: vorderer Verbindungssteg des Oberteils
- 30: hintere Kante
- 31: vordere Kante
- 32: dritte Messeranlage
- 33: dritte Messerauflage
- 34: vorderer Verbindungssteg des Unterteils
- 35: hinterer Verbindungssteg des Unterteils
- 36: Befestigungsbohrung
- 37: Befestigungsbohrung
- 38: erste untere Wölbung
- 39: zweite untere Wölbung
- 40: Öffnung

- A: Arbeitsrichtung

## Patentansprüche

1. Mähfingeranordnung umfassend
ein Unterteil (4) und ein als Blechumformteil gebildetes Oberteil (3), die miteinander verbunden sind und zwei Mähfinger (1, 2) bilden,
einen Klingenspalt (15), der zum Führen eines Mähmessers zwischen dem Unterteil (4) und dem Oberteil (3) gebildet ist,
wobei das Unterteil (4) untere Gegenschneiden (20, 21) und das Oberteil (3) obere Gegenschneiden (22, 23) für das Mähmesser bilden und
wobei die beiden Mähfinger (1, 2) über einen hinteren (26) und einen vorderen (29) Verbindungssteg am Oberteil (3) und über einen hinteren (35) und einen vorderen (34) Verbindungssteg am Unterteil (4) miteinander verbunden sind,
wobei das Oberteil (3) zwischen dem vorderen und dem hinteren Verbindungssteg (29, 26) je Mähfinger (1, 2) eine obere Wölbung (24, 25) aufweist,
**dadurch gekennzeichnet,**
**dass** der vordere Verbindungssteg (29) des Oberteils (3) nicht gewölbt ist und dass die beiden vorderen Verbindungsstege (29, 34) des Unterteils (4) und des Oberteils (3) Teil des Klingenspalts (15) sind.

2. Mähfingeranordnung nach Anspruch 1,
**dadurch gekennzeichnet,**
**dass** der hintere Verbindungssteg (26) des Oberteils (3) an einem in Arbeitsrlchtung (A) betrachtet hinteren Ende der Mähfinger (1, 2) angeordnet ist.

3. Mähfingeranordnung nach einem der vorangehenden Ansprüche,
**dadurch gekennzeichnet,**
**dass** der hintere Verbindungssteg (26) des Oberteils (3) zur Befestigung der Mähfingeranordnung an einem Fingerbalken dient.

4. Mähfingeranordnung nach einem der vorangehenden Ansprüche,
**dadurch gekennzeichnet,**
**dass** der hintere Verbindungssteg (35) des Unterteils (4) an einem in Arbeitsrichtung betrachtet hinteren Ende der Mähfinger (1, 2) angeordnet ist.

5. Mähfingeranordnung nach einem der vorangehenden Ansprüche,
**dadurch gekennzeichnet,**
**dass** der hintere Verbindungssteg (35) des Unterteils (4) zur Befestigung der Mähfingeranordnung an einem Fingerbalken dient.

6. Mähfingeranordnung nach einem der vorangehenden Ansprüche,
**dadurch gekennzeichnet,**
**dass** das Unterteil (4) eine erste Messerauflage (16) an einem ersten der beiden Mähfinger (1) und eine zweite Messerauflage (17) an einem zweiten der beiden Mähflnger (2) aufweist, wobei die beiden Messerauflagen (16, 17) über den vorderen Verbindungssteg (34) des Unterteils (4) miteinander verbunden sind und wobei der vordere Verbindungssteg (34) des Unterteils (4) eine dritte Messerauflage (33) bildet.

7. Mähfingeranordnung nach Anspruch 6,
**dadurch gekennzeichnet,**
**dass** die erste und die zweite Messerauflage (16, 17) jeweils zwei untere Gegenschneiden (20, 21) bilden.

8. Mähfingeranordnung nach einem der Ansprüche 6 oder 7,
**dadurch gekennzeichnet,**
**dass** das Oberteil (3) eine erste Messeranlage (18) an einem ersten (1) er beiden Mähfinger (12) und eine zweite Messeranlage (19) an einem zweiten (2) der beiden Mähfinger (12) aufweist, wobei die beiden Messeranlagen (18, 19) über den vorderen Verbindungssteg (29) des Oberteils (3) miteinander verbunden sind und wobei der vordere Verbindungssteg (29) des Oberteils (3) eine dritte Messeranlage (32) bildet.

9. Mähfingeranordnung nach Anspruch 8,
**dadurch gekennzeichnet,**
**dass** die erste und die zweite Messeranlage (18, 19) jeweils zwei obere Gegenschneiden (22, 23) bilden.

10. Mähfingeranordnung nach einem der Ansprüche 8 oder 9,
**dadurch gekennzeichnet,**
**dass** die Messerauflagen (16, 17, 33) des Unterteils (4) und die Messeranlagen (18, 19, 32) des Oberteils (3) den Klingenspalt (15) bilden.

11. Mähfingeranordnung nach einem der vorangehenden Ansprüche,
**dadurch gekennzeichnet,**
**dass** das Oberteil (3) im Bereich der ersten und der zweiten Messeranlage (18, 19) eben ausgebildet ist und die oberen Wölbungen (24, 25) in Arbeitsrichtung (A) betrachtet vor einer hinteren Kante (30) des vorderen Verbindungsstegs (29) beginnt.

12. Mähfingeranordnung einem der vorangehenden Ansprüche,
**dadurch gekennzeichnet,**
**dass** die Verbindungsstege (26, 29) des Oberteils (3) und die oberen Wölbungen (24, 25) eine Öffnung (40) bilden, die teilweise bis in den hinteren Verbindungssteg (26) reicht.

13. Mähfingeranordnung nach einem der vorangehenden Ansprüche,
**dadurch gekennzeichnet,**
**dass** das Unterteil (4) eine Auflageplatte (5) aufweist, die die Messerauflage (16, 17, 33) bildet, und dass das Unterteil (4) einen Träger (6) aufweist, der mit der Auflageplatte (5) verbunden ist und den hinteren Verbindungssteg (35) des Unterteils (4) umfasst.

14. Mähfingeranordnung nach einem der vorangehenden Ansprüche,
**dadurch gekennzeichnet,**
**dass** in dem hinteren Verbindungssteg (35) des Unterteils (4) Befestigungsdurchbrüche (36, 37) zum Befestigen der Mähfingeranordnung an einen Messerbalken vorgesehen sind, die einen von einem Kreis abweichenden Querschnitt aufweisen.

## Claims

1. Mowing finger arrangement, comprising
a lower element (4) and an upper element (3), the upper element (3) being formed as a formed sheet metal part, and which two elements are connected to each other and form two mowing fingers (1, 2),
a blade gap (15), which is formed for guiding a mowing sickle between the lower element (4) and the upper element (3),
wherein the lower element (4) forms lower counter cutting edges (20, 21) and the upper element (3) forms upper counter cutting edges (22, 23) for the mowing sickle and
wherein the two mowing fingers (1, 2) are connected to each other via a rear (26) and a front (29) connection web on the upper element (3) and via a rear (35) and a front (34) connection web on the lower element (4),
wherein the upper element (3) has for each mowing finger (1, 2) an upper bulge (24, 25) between the front and the rear connection web (29, 26),
**characterised in**
**that** the front connection web (29) of the upper element (3) is not bulged and that the two front connection webs (29, 34) of the lower element (4) and of the upper element (3) are a part of the blade gap (15).

2. Mowing finger arrangement according to claim 1,
**characterised in**
**that** the rear connection web (26) of the upper element (3) is, when seen in working direction (A), arranged on a rear end of the mowing finger (1, 2).

3. Mowing finger arrangement according to one of the preceding claims,
**characterised in**
**that** the rear connection web (26) of the upper element (3) serves for attaching the mowing finger arrangement on a bed plate.

4. Mowing finger arrangement according to one of the preceding claims,
**characterised in**
**that** the rear connection web (35) of the lower element (4) is, when seen in working direction (A), arranged on a rear end of the mowing finger (1, 2).

5. Mowing finger arrangement according to one of the preceding claims,
**characterised in**
**that** the rear connection web (35) of the lower element (4) serves for attaching the mowing finger arrangement on a bed plate.

6. Mowing finger arrangement according to one of the preceding claims,
**characterised in**
**that** the lower element (4) has a first sickle support (16) on a first of the two mowing fingers (1) and a second sickle support (17) on a second of the two mowing fingers (2), wherein the two sickle supports (16, 17) are connected to each other via the front connection web (34) of the lower element (4) and wherein the front connection web (34) of the lower element (4) forms a third sickle support (33).

7. Mowing finger arrangement according to claim 6,
**characterised in**
**that** the first and the second sickle supports (16, 17) each form two lower counter cutting edges (20, 21).

8. Mowing finger arrangement according to one of claims 6 or 7,
**characterised in**
**that** the upper element (3) has a first sickle abutment (18) on a first mowing finger (1) of the two mowing fingers (1, 2) and a second sickle abutment (19) on a second mowing finger (2) of the two mowing fingers (1, 2), wherein the two sickle abutments (18, 19) are connected to each other via the front connection web (29) of the upper element (3) and wherein the front connection web (29) of the upper element (3) forms a third sickle abutment (32).

9. Mowing finger arrangement according to claim 8,
**characterised in**
**that** the first and the second sickle abutments (18, 19) each form two upper counter cutting edges (22, 23).

10. Mowing finger arrangement according to one of claims 8 or 9,
**characterised in**
**that** the sickle supports (16, 17, 33) of the lower element (4) and the sickle abutments (18, 19, 32) of the upper element (3) form the blade gap (15).

11. Mowing finger arrangement according to one of the preceding claims,
**characterised in**
**that** the upper element (3) is formed plane in the area of the first and the second sickle abutments (18, 19) and the upper bulges (24, 25) start, when seen in working direction (A), in front of a rear edge (30) of the front connection web (29).

12. Mowing finger arrangement according to one of the preceding claims,
**characterised in**
**that** the connection webs (26, 29) of the upper element (3) and the upper bulges (24,25) form an opening (40), which extend partially into the rear connection web (26).

13. Mowing finger arrangement according to one of the preceding claims,
**characterised in**
**that** the lower element (4) has a support plate (5), which forms the sickle supports (16, 17, 33), and that the lower element (4) has a carrier (6), which is connected to the support plate (5) and includes the rear connection web (35) of the lower element (4).

14. Mowing finger arrangement according to one of the preceding claims,
**characterised in**
**that** in the rear connection web (35) of the lower element (4), attachment through holes (36, 37) are provided for attaching the mowing finger arrangement on a bed plate, which have a cross-section deviating from a circle.

## Revendications

1. Agencement de doigts de coupe comprenant
une partie inférieure (4) et une partie supérieure (3) formée sous forme de pièce estampée en tôle, qui sont reliées l'une à l'autre et forment deux doigts de coupe (1, 2),
une fente de lame (15), qui est formée pour guider un couteau de coupe entre la partie inférieure (4) et la partie supérieure (3),
la partie inférieure (4) formant des contre-lames (20, 21) inférieures et la partie supérieure (3) des contre-lames (22, 23) supérieures pour le couteau de coupe et
les deux doigts des coupes (1, 2) étant reliés l'un à l'autre par une entretoise de liaison arrière (26) et une entretoise de liaison avant (29) sur la partie supérieure (3) et par une entretoise de liaison arrière (35) et une entretoise de liaison avant (34) sur la partie inférieure (4), la partie supérieure (3) présentant entre l'entretoise de liaison avant et l'entretoise de liaison arrière (29, 26) une courbure (24, 25) supérieure par doigt de coupe (1, 2)
**caractérisé en ce que**
l'entretoise de liaison avant (29) de la partie supérieure (3) n'est pas courbée et **en ce que** les deux entretoises de liaison (29, 34) avant de la partie inférieure (4) et de la partie supérieure (3) font parties de la fente de lame (15).

2. Agencement de doigts de coupe selon la revendication 1, **caractérisé en ce que**
l'entretoise de liaison (26) arrière de la partie supérieure (3) est disposée sur une extrémité arrière, vue dans le sens de travail (A), des doigts de coupe (1, 2).

3. Agencement de doigts de coupe selon l'une des revendications précédentes,
**caractérisé en ce que**
l'entretoise de liaison (26) arrière de la partie supérieure (3) sert à la fixation de l'agencement de doigts de coupe sur une barre coupeuse.

4. Agencement de doigts de coupe selon l'une des revendications précédentes,
**caractérisé en ce que**
l'entretoise de liaison (35) arrière de la partie inférieure (4) est disposée sur une extrémité arrière, vue dans le sens de travail, des doigts de coupe (1, 2) .

5. Agencement de doigts de coupe selon l'une des revendications précédentes,
**caractérisé en ce que**
l'entretoise de liaison (35) arrière de la partie inférieure (4) sert à la fixation de l'agencement de doigts de coupe sur une barre coupeuse.

6. Agencement de doigts de coupe selon l'une des revendications précédentes,
**caractérisé en ce que**
la partie inférieure (4) présente un premier support de couteau (16) sur un premier des deux doigts de coupe (1) et un second support de couteau (17) sur un second des deux doigts de coupe (2), les deux supports de couteau (16, 17) étant reliés l'un à l'autre par l'entretoise de liaison (34) avant de la partie inférieure (4) et l'entretoise de liaison (34) avant de la partie inférieure (4) formant un troisième support de couteau (33).

7. Agencement de doigts de coupe selon la revendication 6,
**caractérisé en ce que** le premier et le second support de couteau (16, 17) forment à chaque fois deux contre-lames (20, 21) inférieures.

8. Agencement de doigts de coupe selon l'une des revendications 6 ou 7,
**caractérisé en ce que**
la partie supérieure (3) forme une première installation de couteau (18) sur un premier (1) des deux doigts de coupe (1, 2) et une seconde installation de couteau (19) sur un second (2) des deux doigts de coupe (1, 2), les deux installations de couteau (18, 19) étant reliées l'une à l'autre par l'entretoise de liaison (29) avant de la partie supérieure (3) et l'entretoise de liaison (29) avant de la partie supérieure (3) formant une troisième installation de couteau (32).

9. Agencement de doigts de coupe selon la revendication 8,
**caractérisé en ce que**
la première et la seconde installation de couteau (18, 19) forment à chaque fois deux contre-lames (22, 23) supérieures.

10. Agencement de doigts de coupe selon l'une des revendications 8 ou 9,
**caractérisé en ce que**
les supports de couteau (16, 17, 33) de la partie inférieure (4) et les installations de couteau (18, 19, 32) de la partie supérieure (3) forment la fente de lame (15).

11. Agencement de doigts de coupe selon l'une des revendications précédentes,
**caractérisé en ce que**
la partie supérieure (3) est conçue plane dans la zone de la première et de la seconde installation de couteau (18, 19) et démarre les courbures (24, 25) supérieures, vues dans le sens de travail (A), avant une arête (30) arrière de l'entretoise de liaison (29).

12. Agencement de doigts de coupe selon l'une des revendications précédentes,
**caractérisé en ce que**
les entretoises de liaison (26, 29) de la partie supérieure (3) et les courbures (24, 25) supérieures forment une ouverture (40) qui va en partie jusque dans l'entretoise de liaison (26) arrière.

13. Agencement de doigts de coupe selon l'une des revendications précédentes,
**caractérisé en ce que**
la partie inférieure (4) présente une plaque de support (5) qui forme les supports de couteau (16, 17, 33) et **en ce que** la partie inférieure (4) présente un support (6) qui est reliée à la plaque d'appui (5) et comprend l'entretoise de liaison (35) arrière de la partie inférieure (4).

14. Agencement de doigts de coupe selon l'une des revendications précédentes,
**caractérisé en ce que**
des percements de fixation (36, 37) sont prévus dans l'entretoise de liaison (35) arrière de la partie inférieure (4) pour la fixation de l'agencement de doigts de coupe sur une barre de couteau, lesquels percements présentent une section différente d'un cercle.
